# EUROPEAN PATENT SPECIFICATION

(11) **EP 3 381 647 B1**
(45) Date of publication and mention of the grant of the patent: **10.06.2020**
(21) Application number: 18165179.5
(22) Date of filing: 29.03.2018
(51) Int. Cl.: B29C 45/76

(54) **INJECTION MOLDING MACHINE AND INJECTION MOLDING INFORMATION PROCESSING DEVICE**
SPRITZGIESSMASCHINE UND SPRITZGIESSINFORMATIONSVERARBEITUNGSVORRICHTUNG
MACHINE DE MOULAGE PAR INJECTION ET DISPOSITIF DE TRAITEMENT D'INFORMATIONS DE MOULAGE PAR INJECTION

(30) Priority: 31.03.2017 JP 2017073150
(43) Date of publication of application: 03.10.2018
(73) Proprietor: Sumitomo Heavy Industries, Ltd., Tokyo 141-6025 (JP)
(72) Inventor: ABE, Masahiro, Chiba-shi, Chiba 263-0001 (JP)
(74) Representative: Louis Pöhlau Lohrentz

(56) References cited:
- EP-A2- 0 961 186
- US-A- 4 911 629
- US-A1- 2004 093 115
- US-A1- 2004 219 257
- US-A1- 2009 051 064
- US-A1- 2013 095 200
- US-A1- 2016 236 392

## Description

### BACKGROUND OF THE INVENTION

### Field of the Invention

Certain embodiment of the present invention relates to an injection molding machine and an injection molding information processing device.

### Description of Related Art

United States Patent Application US 2016/0236392 A1 discloses a procedure which allows for checking if appropriate set values are used.

United States Patent Application US 2013/0095200 A1 discloses a procedure in which the average deviation of a reference physical quantity and a current physical quantity is compared with a temporally changing threshold.

A quality management device described in Japanese Unexamined Patent Application Publication No. 64-14015 sets each molding condition in each molding process and an upper limit monitoring condition and a lower limit monitoring condition of some conditions or all conditions corresponding to each molding process and compares monitoring condition data and a detection value from each detector to predict abnormality.

Meanwhile, if a mold unit is replaced, a set value of a controlled variable is changed, and thus, an actual value of a physical amount with respect to a manipulated variable is changed.

Accordingly, it is difficult to determine presence or absence of abnormality by comparing the actual values of the physical amount relating to the manipulated variable with each other.

### SUMMARY OF THE INVENTION

The present invention is made in consideration of the above-described problem, and an object thereof is to provide an injection molding machine capable of determining presence of absence of abnormality by comparing actual values of a physical amount relating to a manipulated variable with each other.

In order to achieve the above-described object, according to an aspect of the present invention, there is provided an injection molding machine, including: an injection molding information processing device which processes information relating to injection molding, in which the injection molding information processing device includes an actual value storage unit which, for each mold unit attached to the injection molding machine, stores molding information in which a set amount of a controlled variable which is molding conditions and an actual value of a physical amount relating to a manipulated variable for operating such that the controlled variable is the set value are associated with each other, and an actual value extraction unit which extracts the actual values of a plurality of shots performed under at least one of the same molding conditions and similar molding conditions, from the molding information stored in the actual value storage unit.

According to the aspect of the present invention, an injection molding machine capable of determining presence of absence of abnormality by comparing actual values of the physical amount relating to the manipulated variable with each other is provided.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a functional block diagram showing components of a controller according to an embodiment.
Fig. 4 is a diagram showing molding information stored in an actual value storage unit according to the embodiment.
Fig. 5 is a diagram showing molding information extracted by an actual value extraction unit according to the embodiment.
Fig. 6 is a diagram showing other molding information extracted by the actual value extraction unit according to the embodiment.
Fig. 7 is a diagram showing other molding information extracted by the actual value extraction unit according to the embodiment.
Fig. 8 is a graph showing a waveform of actual values of torque of a mold clamping motor compared by an actual value comparison unit according to the embodiment.
Fig. 9 is a diagram showing a comparison result of the actual value comparison unit according to the embodiment for one molding condition.
Fig. 10 is a graph showing a comparison result of the actual value comparison unit according to the embodiment for a plurality of molding conditions.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

### Injection Molding Machine

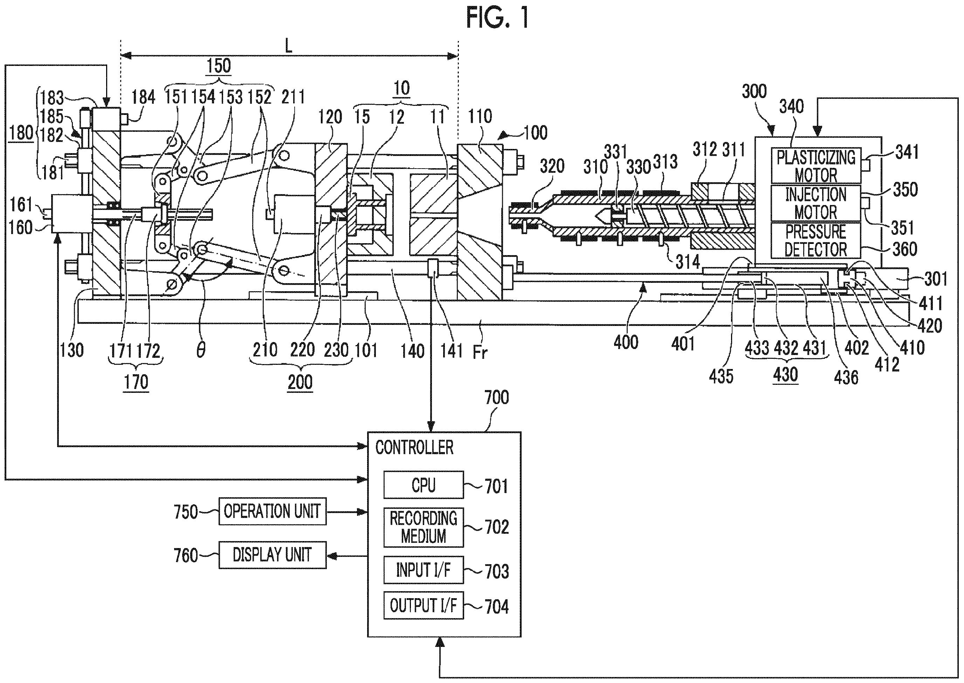

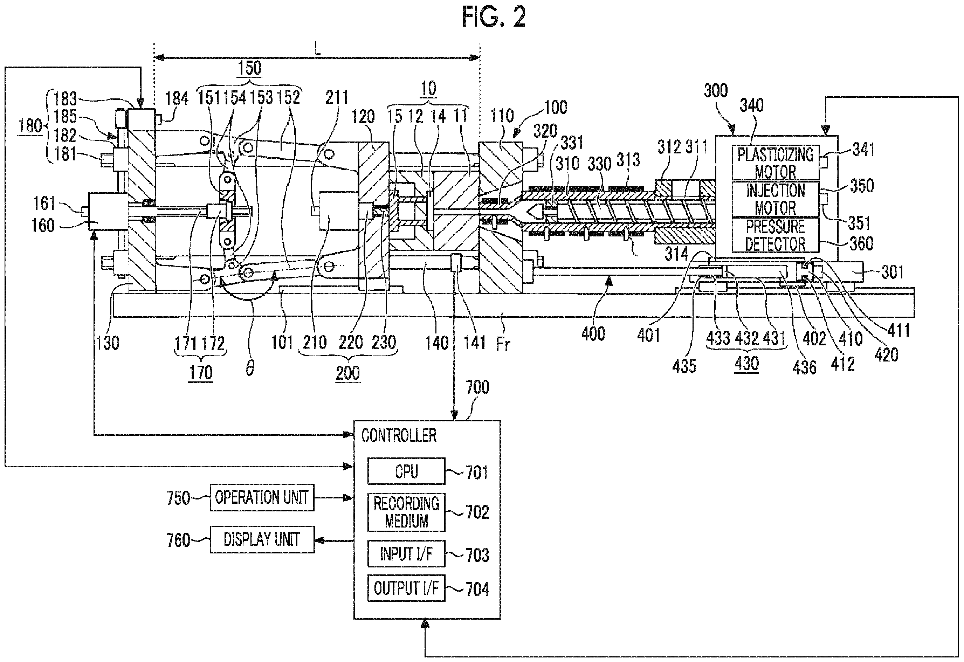

Fig. 1 is a view showing a state when a mold opening of an injection molding machine according to an embodiment is completed. Fig. 2 is a view showing a state when a mold of the injection molding machine according to the embodiment is clamped. As shown in Figs. 1 and 2, the injection molding machines include a mold clamping unit 100, an ejector unit 200, an injection unit 300, a movement unit 400, and a controller 700. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 is moved forward or rearward with respect to the stationary platen 110, and thus, closing, clamping, and opening of the mold are performed. The mold unit 10 is configured of the stationary mold 11 and the movable mold 12.

The toggle support 130 is connected to the stationary platen 110 with a gap therebetween, and is placed on the frame Fr to be movable in mold opening and closing directions . In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or the like and the second link 153 is attached to the toggle support 130 so as to be oscillated by pins or the like. The second link 153 is attached to the crosshead 151 via a third link 154. If the crosshead 151 is moved forward or rearward with respect to the toggle support 130, the first link 152 and the second link 153 are bent and stretched and the movable platen 120 is moved forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 is moved forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 is moved forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products maybe simultaneously obtained.

In the mold opening process, the mold clamping motor 160 is driven to move the crosshead 151 rearward to a mold opening completion position at a set speed. Accordingly, the movable platen 120 is moved rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions . In addition, instead of the speed, the positions, or the like of the crosshead 151, a speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 becomes a predetermined angle at the time of a mold touch where the movable mold 12 comes into contact with the stationary mold 11.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 are used to monitor or control the position of the toggle support 130 or the gap L.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motors 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other in mold opening and closing directions by the tie bar with a gap therebetween. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is open is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can be moved forward or rearward through a through-hole of the movable platen 120. A front end portion of the ejector rod 230 comes into contact with a movable member 15 which is disposed to be movable forward or rearward inside the movable mold 12. The front end portion of the ejector rod 230 maybe connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 is moved forward and the molding product is ejected. Thereafter, the ejector motor 210 is driven to move the ejector rod 230 rearward at a set speed, and thus, the movable member 15 is moved rearward to an original stand by position. For example, a position or speed of the ejector rod 230 is detected using an ejector motor encoder 211. The ejector motor encoder 211 detects the rotation of the ejector motor 210 and sends signals indicating the detection results to the controller 700.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 is moved rearward. Thereafter, if the screw 330 is moved forward, the liquid molding material accumulated in front of the screw 330 is injected from the nozzle 320 and the inside of the mold unit 10 is filled with the liquid molding material.

A back flow prevention ring 331 is attached to a front portion of the screw 330 to be movable forward or rearward as a backflow prevention valve which prevents a backflow of the molding material from the front side of the screw 330 toward the rear side when the screw 330 is pushed forward.

When the screw 330 is moved forward, the backflow prevention ring 331 is pushed toward the rear side by the pressure of the molding material in front of the screw 330 and is moved rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and is moved forward relative to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward relative to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder or the like, for example.

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may be moved forward or may be moved rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 is moved rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 is moved rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 is moved forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 is moved rearward and thus, the nozzle 320 is separated from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "shot" or a "molding cycle" . In addition, a time required for once shot is also referred to as a "molding cycle time".

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

### Injection Molding Information Processing Device

The controller 700 also serves as an injection molding information processing device for processing information relating to injection molding. In addition, the injection molding information processing device may be provided separately from the controller 700. In this case, in order to acquire various information from the controller 700, the injection molding information processing device may be connected to the controller 700 via a network such as a LAN (Local Area Network) or an internet line. The connection may be either a wired connection or a wireless connection.

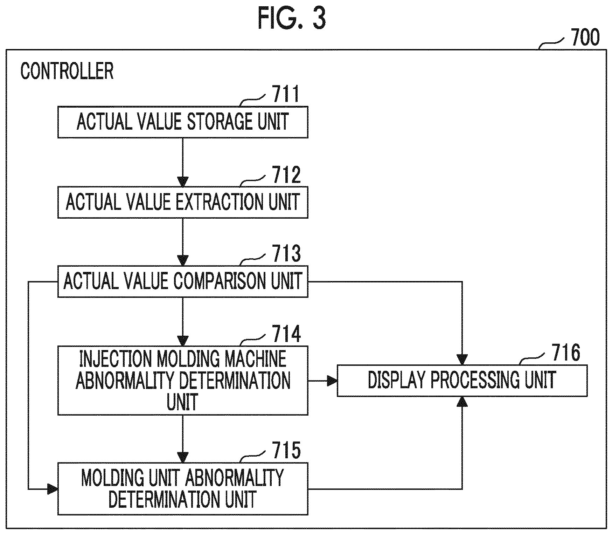

Fig. 3 is a functional block diagram showing components of the controller according to an embodiment. The functional blocks shown in Fig. 3 are conceptual and do not necessarily have to be physically configured as shown. All functional blocks or some functional blocks can be configured so as to be dispersed or integrated functionally or physically in any unit. All processing functions or some processing functions performed in the functional blocks can be realized by a program executed by a CPU or can be realized as hardware by wired logic.

As shown in Fig. 3, the controller 700 includes an actual value storage unit 711 which, for each mold unit 10 attached to the injection molding machine, stores a set value of a controlled variable which is molding conditions and an actual value of a physical amount relating to a manipulated variable for operating such that the controlled variable is the set value, in association with each other.

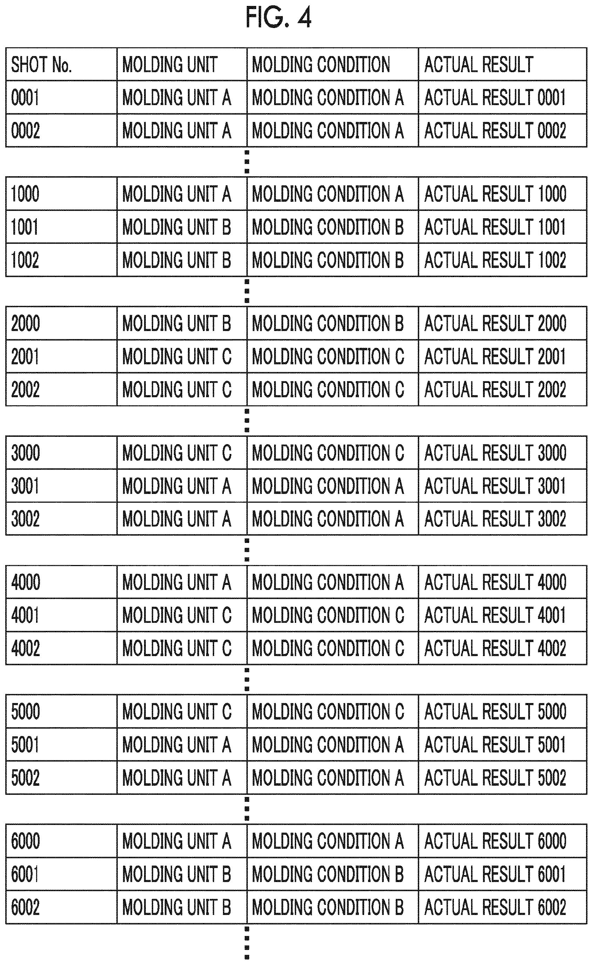

Fig. 4 is a diagram showing molding information stored in the actual value storage unit according to the embodiment. As shown in Fig. 4, the actual value storage unit 711 stores the mold unit 10, a set value of a controlled variable which is molding conditions of the molding product molded inside the mold unit 10, and an actual value of a physical amount relating to a manipulated variable operated such that the controlled variable is the set value, in association with each other.

For example, the controlled variable includes a movement position (or a movement distance indicating the movement position) of a movable member, a movement time of the movable member, a movement speed of the movable member, a force or a pressure applied to the movable member, or the like. For example, the controlled variable includes a movement position or a movement speed of the crosshead 151 in the mold closing process, the mold clamping process, and the mold opening process, a holding pressure or a holding time of the molding material in the holding pressure process, the back pressure of the screw 330 in the plasticizing process, torque of the ejector motor 210 in the ejection process, or the like.

The set value of the controlled variable is set for each mold unit 10. One set value of the controlled variable may be set for each mold unit 10. The set value of the controlled variable is input to the operation unit 750 or the like and is stored in the recording medium 702.

For example, the manipulated variable includes a supply current of a motor for driving the movable member, or the like. For example, a combination of the movable member and the motor includes a combination of the crosshead 151 and the mold clamping motor 160, a combination of the ejector rod 230 and the ejector motor 210, a combination of the screw 330 and the injection motor 350, a combination of the screw 330 and the plasticizing motor 340, or the like.

The physical amount relating to the manipulated variable means a physical amount which is changed according to the manipulated variable, in addition to the manipulated variable. In a case where the manipulated variable in the supply current of the motor, the physical amount changed according to the manipulated variable includes torque of the motor or a temperature of the motor. The torque of the motor or a heating value of the motor is proportional to the supply current of the motor. The actual value is detected by a detector such as a current detector, a torque detector, or a temperature detector. The actual value of the torque of the motor may be obtained from a control command value of an inverter which supplies the current to the motor.

A type of the physical amount relating to the manipulated variable may be selectable on the operation screen. In addition, the actual value of the physical amount relating to the manipulated variable may be a waveform, a peak value, or a value when the movable member exists at a specific position, or may be selectable on the operation screen.

The actual value storage unit 711 monitors the actual value of the physical amount relating to the manipulated variable while the injection molding machine performs the molding operation and stores a monitoring result and the set value of the controlled variable, in association with each other. The storage may be performed while a predetermined mode is selected on the operation screen. A user who selects the predetermined mode may be a user of a delivery destination of the injection molding machine or a maintenance manager of a manufacturer of the injection molding machine. In the latter case, the maintenance manager selects the predetermined mode in order to determine presence or absence of abnormality in the injection molding machine in a periodic inspection of the injection molding machine or the like.

In addition, the controlled variable of the present embodiment is the physical amount of the movable member. However, the present invention is not limited to this. For example, the controlled variable may be a temperature of the mold unit 10, a temperature of the cylinder 310, or the like. In a case where the controlled variable is the temperature of the cylinder 310, the manipulated variable is the supply current of the heating unit 313.

Meanwhile, the presence or absence of the abnormality caused by deterioration of the injection molding machine or the mold unit 10 can be determined by a temporal change of the actual value of the physical amount (hereinafter, simply referred to as a "feature amount") relating to the manipulated variable. For example, as the mold clamping unit 100 deteriorates, an energy loss required for controlling the position of the crosshead 151 increases, and thus, torque of the mold clamping motor 160 increases.

The injection molding machine or the mold unit 10 gently deteriorates, and thus, the actual value of the feature amount is gently changed. Accordingly, in the determination of the presence or absence of the abnormality causedby the deterioration, the actual values of the feature amounts between a plurality of shots, which have time gaps, are compared with each other.

As shown in Fig. 4, if the mold unit 10 is exchanged, the molding conditions are changed, and thus, the actual value of the feature amount is changed. The change of the actual value of the feature amount includes the change of the actual value caused by the change of the molding conditions and the change of the actual value caused by the deterioration of the injection molding machine or the mold unit 10.

Therefore, as shown in Fig. 3, the controller 700 includes an actual value extraction unit 712 which extracts the actual value of the feature amount in a plurality of shots performed under the same molding conditions, from the molding information stored in the molding value storage unit 711.

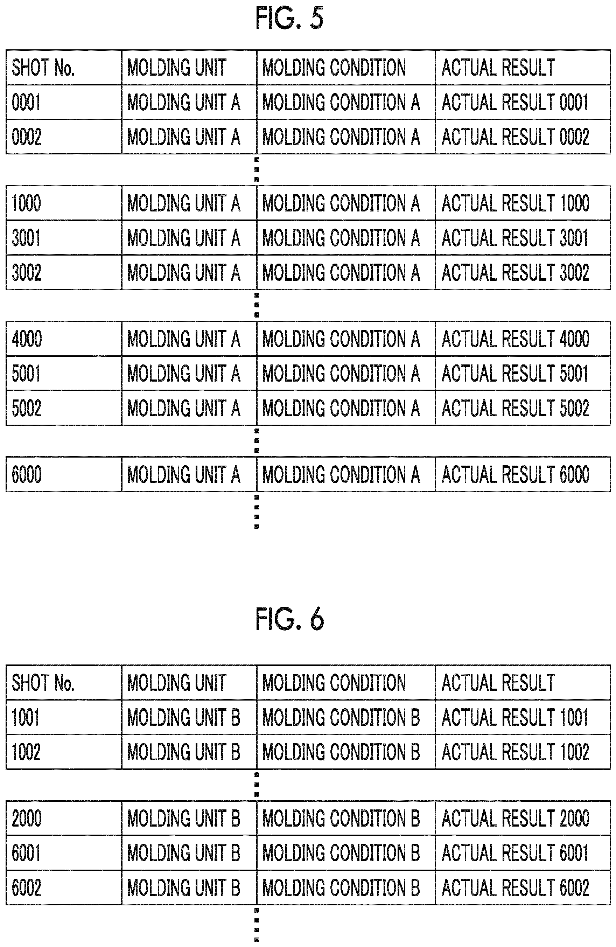

Fig. 5 is a diagram showing the molding information extracted by the actual value extraction unit according to the embodiment. As shown in Fig. 5, the actual value extraction unit 712 may extract the actual values of the feature amounts in the plurality of shots performed under the same molding conditions A, from the molding information (the molding information shown in Fig. 4) stored in the actual value storage unit 711.

Fig. 6 is a diagram showing other molding information extracted by the actual value extraction unit according to the embodiment. As shown in Fig. 6, the actual value extraction unit 712 may extract the actual values of the feature amounts in the plurality of shots performed under the same molding conditions B, from the molding information (the molding information shown in Fig. 4) stored in the actual value storage unit 711.

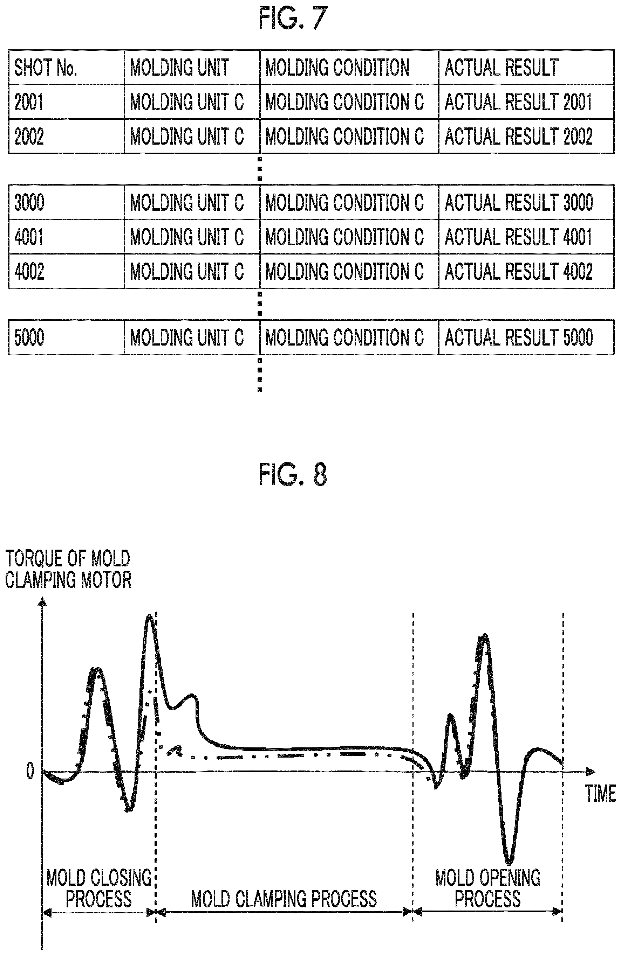

Fig. 7 is a diagram showing other molding information extracted by the actual value extraction unit according to the embodiment. As shown in Fig. 7, the actual value extraction unit 712 may extract the actual values of the feature amounts in the plurality of shots performed under the same molding conditions C, from the molding information (the molding information shown in Fig. 4) stored in the actual value storage unit 711.

As shown in Figs. 5 to 7, the actual values of the feature amounts in the plurality of shots performed under the same molding conditions are extracted, and thus, it is possible to eliminate the changes of the actual value caused by the change of the molding conditions from the changes of the actual values of the feature amounts. Accordingly, it is possible to determine the presence or absence of the abnormality by comparing the actual values of the feature amounts.

In addition, the actual value extraction unit 712 of the present embodiment extracted the actual values of the plurality of shots performed under the same molding conditions. However, the actual value extraction unit 712 may extract the actual values of the feature amounts in the plurality of shots performed under similar molding conditions. For example, in a case where the molding conditions, which have a time gap where it is possible to determine the presence or absence of the abnormality by comparing the actual values, do not exist in the same shot, the actual value extraction unit 712 may extract the actual values of the feature amounts in the plurality of shots performed under the similar molding conditions . The actual value extraction unit 712 may extract the actual values of the feature amounts in the plurality of shots performed under at least one of the same molding conditions and the similar molding conditions.

For example, whether or not the molding conditions are similar as each other can be determined based on whether or not the set value of the controlled variable is within an allowable range or whether or not the actual value (so-called logging data) of the physical amount used for managing the molding operation is within an allowable range. For example, the physical amount used for managing the molding operation includes a position, a pressure, a force, a temperature, or the like, in addition to a time such as the molding cycle time, a mold closing time, a mold opening time, a filling time, or a plasticizing time. The physical amount used for determining similarity of the molding conditions may be selectable on the operation screen.

As shown in Fig. 3, the controller 700 may include an actual value comparison unit 713 which compares the actual values of the feature amounts in the plurality of shots which are extracted from the actual value extraction unit 712 and are performed under the same molding conditions, with each other. For example, the actual value comparison unit 713 compares the actual value of the feature amount in a reference shot performed under the same molding conditions and the actual values of the feature amounts in other shots performed under the same molding conditions . For example, the comparison of the actual values is performed by obtaining a size of difference of the actual values. It is possible to determine the presence or absence of the abnormality by comparing the actual values of the feature amounts . The actual value of the feature amount in the reference shot is used for the determination of the presence or absence of the abnormality, and thus, a trouble of preparing reference data based on simulation, experience, or the like can be omitted.

The reference shot may be a past shot of other shots to be compared and may be selected on the operation screen. The reference shot may be a shot at the time of shipment inspection at the manufacturer of the injection molding machine or may be a shot at the time of the injection molding at the delivery destination of the injection molding machine. In the latter case, it is preferable that the reference shot is as early as possible from the delivery of the injection molding machine. It is possible to compare the actual values of the feature amounts which have time gaps, and thus, the presence or absence of the abnormality is easily determined.

Fig. 8 is a graph showing a waveform of actual values of torque of the mold clamping motor compared by the actual value comparison unit according to the embodiment. In Fig. 8, a vertical axis indicates the actual value of the torque of the mold clamping motor 160, and a horizontal axis indicates an elapsed time after the mold closing starts. In Fig. 8, a fact that the actual value of the torque of the mold clamping motor 160 is positive means that a current flows from the inverter, which supplies the current to the mold clamping motor 160, to the mold clamping motor 160. In addition, a fact that the actual value of the torque of the mold clamping motor 160 is negative means that the current flows from the mold clamping motor 160 to the inverter due to deceleration of the mold clamping motor 160.

In Fig. 8, a two-dot chain line indicates a waveform of the torque of the mold clamping motor 160 in the reference shot, and a solid line indicates a waveform of the torque of the mold clamping motor 160 in another shot. If the mold clamping unit 100 deteriorates, the energy loss required for controlling the position of the crosshead 151 increases, and thus, the torque of the mold clamping motor 160 increases, and for example, the waveform is changed from the waveform shown by the two-dot chain line in Fig. 8 to the waveform shown by the solid line.

The actual value comparison unit 713 compares the actual values of the feature amounts of the plurality of shots which are performed before and after exchanging the mold unit 10 and are performed under the same molding conditions, with each other. For example, in a case where the actual value comparison unit 713 compares Shot No. 0001 and Shot No. 6000 performed under the same molding conditions A with each other, as shown in Fig. 4, a mold exchange from the mold unit A to the mold unit B, an exchange from the mold unit B to the mold unit C, an exchange from the mold unit C to the mold unit A, an exchange from the mold unit A to the mold unit C, and an exchange from the mold unit C to the mold unit A are performed between the Shot No. 0001 and the Shot No. 6000. The actual values of the feature amounts which have time gaps, and thus, the presence or absence of the abnormality is easily determined.

In addition, the actual value comparison unit 713 of the present embodiment may compare the actual values of the feature amounts of the plurality of shots performed under the same molding conditions, with each other. However, the actual value comparison unit 713 may compare the actual values of the feature amounts in the plurality of shots performed under the similar molding conditions, with other. For example, in a case where the shots, which have time intervals where it is possible to determine the presence or absence of the abnormality by comparing the actual values and are performed in the same condition, do exist, the shot performed under the similar molding conditions may be the reference shot. The actual value comparison unit 713 may compare the actual values of the feature amounts in the plurality of shots performed under at least one of the same molding conditions and the similar molding conditions, with each other.

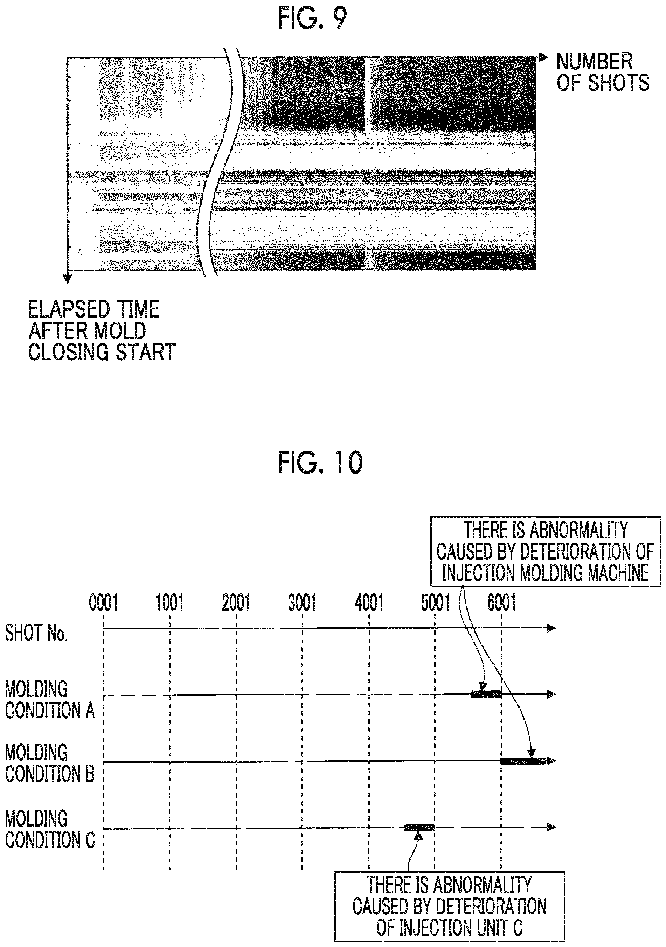

Fig. 9 is a diagram showing a comparison result of the actual value comparison unit according to the embodiment for one molding conditions. In Fig. 9, a horizontal axis indicates a cumulative number of the shots performed under the same molding conditions, and a vertical axis indicates an elapsed time from the mold closing start in each shot. Moreover, in Fig. 9, a gradation of white and black represents the size of the difference between the actual value of the feature amount in the reference shot and the actual values of the feature amounts in other shots, and as a color tone goes from white to black, the more a color tone goes from white to black, the larger the difference between the actual value of the feature amount in reference shot and the actual values of the feature amounts in other shots.

As shown in Fig. 9, the comparison result of the actual value comparison unit 713 may be indicated by the size of the difference between the actual value of the feature amount in the reference shot performed under the same molding conditions and the actual values of the feature amounts in the other shots performed under the same molding conditions. The comparison result shown in Fig. 9 may be displayed on the display unit 760. The user of the injection molding machine who views the display can know the shot number where the size of difference of the actual values of the feature amounts between the plurality of shots is large, the elapsed time after the mold closing starts, or the like, and it is possible to obtain information useful for estimating a cause of deterioration.

Fig. 10 is a graph showing a comparison result of the actual value comparison unit according to the embodiment for a plurality of molding conditions. In Fig. 10, for each molding condition shown in Fig. 4 or the like, the actual value comparison unit 713 obtains a timing at which the size of the difference of the actual value of the feature amount exceeds a threshold value, and the timing is indicated by a black thick line. The threshold value may be common to the determination of the presence or absence of the abnormality caused by the deterioration of injection molding machine and the determination of the presence or absence of the abnormality caused by the deterioration of mold unit. The threshold value may be prepared for each molding condition.

The comparison result shown in Fig. 10 may be displayed on the display unit 760. The user of the injection molding machine who views the display can know the time at which the abnormality occurs by the deterioration of the injection molding machine or the timing at which the abnormality occurs by the deterioration of the mold unit, and it is possible to obtain information useful for estimating a cause of deterioration.

As shown in Fig. 3, the controller 700 may include an injection molding machine abnormality determination unit 714 which determines the presence or absence of the abnormality caused by the deterioration of the injection molding machine, based on the comparison result of the actual value comparison unit 713. For example, the injection molding machine abnormality determination unit 714 determines the presence or absence of the abnormality caused by the deterioration of the injection molding machine, based on the comparison result shown in Fig. 10.

In a case where it is determined that there is the abnormality caused by the deterioration of the injection molding machine, the size of the difference may exceed the threshold value immediately before and immediately after the mold unit 10 is exchanged. For example, in Fig. 10, the mold unit 10 is exchanged between Shot No. 6000 and Shot No. 6001, and the size of the difference exceeds the threshold value immediately before and immediately after the exchange. In this case, it is determined that there is the abnormality caused by the deterioration of the injection molding machine. This is because the probability of simultaneous occurrence of the abnormality caused by the deterioration of the plurality of mold units 10 is very small.

In a case where the size of the difference is less than or equal to the threshold value, the injection molding machine abnormality determination unit 714 may determine that there is no abnormality caused by the deterioration of the injection molding machine.

The injection molding machine abnormality determination unit 714 may determine the presence or absence of the abnormality caused by the deterioration of the current injection molding machine. The actual value extraction unit 712 may extract the past actual value performed under the same or similar molding conditions as the molding conformation used for the injection molding, and the injection molding machine abnormality determination unit 714 may determine the presence or absence of the abnormality caused by the deterioration of the injection molding machine during the injection molding using the actual value extracted by the actual value extraction unit 712 as reference data.

As shown in Fig. 3, the controller 700 may have a mold unit abnormality determination unit 715 which determines the presence or absence of the abnormality caused by the deterioration of the mold unit 10 based on the comparison result of the actual value comparison unit 713. For example, the mold unit abnormality determination unit 715 determines the presence or absence of the abnormality caused by the deterioration of the mold unit 10, based on the comparison result shown in Fig. 10.

In a case where it is determined that there is an abnormality caused by the deterioration of the mold unit 10, the size of the difference exceeds the threshold value immediately before the mold unit 10 is exchanged. In addition, in this case, the size of the difference may be less than or equal to the threshold value immediately after the mold unit 10 is exchanged. For example, in Fig. 10, the mold unit 10 is exchanged between Shot No. 5000 and Shot No. 5001, and the size of the difference exceeds the threshold value immediately after the exchange. However, the size of the difference is less than or equal to the threshold value immediately after the exchange. In this case, it is determined that there is an abnormality in the mold unit C immediately before the exchange. This is because the probability of rapid deterioration of the injection molding machine during the exchange is very small.

In a case where it is determined that there is an abnormality caused by the deterioration of the mold unit 10, the size of the difference is less than or equal to the threshold value immediately before the mold unit 10 is exchanged. In addition, in this case, the size of the difference may exceed the threshold value immediately after the mold unit 10 is exchanged. In this case, it is determined that there is an abnormality in the mold unit immediately after the exchange. This is because the probability of rapid deterioration of the injection molding machine during the exchange is very small.

The mold unit abnormality determination unit 715 may determine that there is no abnormality causedby the deterioration of the mold unit 10 in the case where the size of the difference is equal to or less than the threshold value.

The mold unit abnormality determination unit 715 may determine the presence or absence of the abnormality caused by the deterioration of the current mold unit. The actual value extraction unit 712 may extract the past actual value performed under the same or similar molding conditions as the molding conformation used for the injection molding, and the mold unit abnormality determination unit 715 may determine the presence or absence of the abnormality caused by the deterioration of the mold unit 10 during the injection molding using the actual value extracted by the actual value extraction unit 712 as reference data.

Moreover, in the present embodiment, the threshold value which determines that there is abnormality caused by the degradation of the injection molding machine, and the threshold value which determines that there is abnormality caused by the deterioration of the mold unit are common to each other . However, both threshold values may be separately prepared. In addition, a plurality of threshold values may be prepared so as to determine a degree of the abnormality.

The injection molding machine abnormality determination unit 714 may determine the degree of the abnormality caused by the deterioration of the injection molding machine. The degree of the abnormality caused by the deterioration of the injection molding machine is obtained from the size of the difference of the actual values of the feature amounts, and the larger the size of the difference of the actual values of the feature amounts is, the larger the degree of the abnormality caused by the deterioration of the injection molding machine is. The degree of the abnormality caused by the deterioration of the injection molding machine may be represented by a numerical value or the like.

Similarly, the mold unit abnormality determination unit 715 may determine the degree of the abnormality caused by the deterioration of the mold unit 10. The degree of the abnormality caused by the deterioration of the mold unit 10 is obtained from the size of difference of the actual values of the feature amounts, and the larger the size of the difference of the actual values of the feature amounts is, the greater the degree of the abnormality caused by the deterioration of the mold unit 10 is. The degree of the abnormality caused by the deterioration of the mold unit 10 may be represented by a numerical value or the like.

As shown in Fig. 3, the controller 700 may include a display processing unit 716 which displays the comparison result of the actual value comparison unit 713. For example, the display processing unit 716 displays the comparison result shown in Fig. 9 or the comparison result shown in Fig. 10 on the display unit 760. The user who views the display unit 760 can determine the presence or absence of the abnormality causedby the deterioration of the injection molding machine or the mold unit. In addition, the display processing unit 716 may display the determination result of the injection molding machine abnormality determination unit 714. In addition, the display processing unit 716 may display the determination result of the mold unit abnormality determination unit 715.

### Modification and Improvement

Hereinafter, the embodiment or the like of the injection molding machine is described. However, the present invention is not limited to the above-described embodiment and various modifications and improvements can be applied to the present invention within a scope of the gist of the present invention described in claims.

### Brief Description of the Reference Symbols

10: mold unit
160: mold clamping motor
700: controller
711: actual value storage unit
712: actual value extraction unit
713: actual value comparison unit
714: injection molding machine abnormality determination unit
715: mold unit abnormality determination unit
716: display processing unit
760: display unit

## Claims

1. An injection molding information processing device (700) which processes information relating to injection molding, comprising:
an actual value storage unit (711) which is configured to store, for each of a plurality of mold units (10) that can be attached to an injection molding machine, molding information in which a set value of a controlled variable which is molding conditions and an actual value of a physical amount relating to a manipulated variable for operating such that the controlled variable is the set value are associated with each other; and
an actual value extraction unit (712) which is configured to extract the actual values of a plurality of shots performed under at least one of the same molding conditions and similar molding conditions, from the molding information stored in the actual value storage unit (711).

2. The injection molding information processing device according to claim 1, further comprising:
an actual value comparison unit (713) which is configured to compare the actual values of the plurality of shots which are extracted by the actual value extraction unit (712) and are performed under at least one of the same molding conditions and the similar molding conditions, with each other.

3. The injection molding information processing device according to claim 2,
wherein the actual value comparison unit (713) is configured to compare the actual values of the plurality of shots which are performed before and after exchanging the mold unit (10) and are performed under at least one of the same molding conditions and the similar molding conditions, with each other.

4. The injection molding information processing device according to claim 2 or 3, further comprising:
an injection molding machine abnormality determination unit (714) which is configured to determine presence or absence of abnormality caused by deterioration of the injection molding machine, based on a comparison result of the actual value comparison unit (713).

5. The injection molding information processing device according to any one of claims 2 to 4, further comprising:
a mold unit abnormality determination unit (715) which is configured to determine presence or absence of abnormality caused by deterioration of the mold unit (10), based on the comparison result of the actual value comparison unit (713).

6. The injection molding information processing device according to any one of claims 2 to 5, further comprising:
a display processing unit (716) which is configured to display the comparison result of the actual value comparison unit (713).

## Patentansprüche

1. Spritzgießinformationsverarbeitungsvorrichtung (700), die Informationen bezüglich des Spritzgießens verarbeitet, umfassend:
eine Istwert-Speichereinheit (711), die konfiguriert ist, für jede von mehreren Formeinheiten (10), die an eine Spritzgießmaschine angeschlossen sein können, Formungsinformationen zu speichern, in denen ein Sollwert einer Regelgröße, die Formungsbedingungen ist, und ein Istwert einer physikalischen Größe, die sich auf eine Stellgröße für den Betrieb bezieht, derart, dass die Regelgröße der Sollwert ist, zueinander zugeordnet sind, und
eine Istwert-Extraktionseinheit (712), die konfiguriert ist, die Istwerte mehrerer Schüsse, die unter wenigstens einer von den gleichen Formungsbedingungen und ähnlichen Formungsbedingungen durchgeführt werden, aus den Formungsinformationen zu extrahieren, die in der Istwert-Speichereinheit (711) gespeichert sind.

2. Spritzgießinformationsverarbeitungsvorrichtung nach Anspruch 1, ferner umfassend:
eine Istwert-Vergleichseinheit (713), die konfiguriert ist, die Istwerte der mehreren Schüsse, die durch die Istwert-Extraktionseinheit (712) extrahiert werden und unter wenigstens einer von den gleichen Formungsbedingungen und den ähnlichen Formungsbedingungen durchgeführt werden, miteinander zu vergleichen.

3. Spritzgießinformationsverarbeitungsvorrichtung nach Anspruch 2,
wobei die Istwert-Vergleichseinheit (713) konfiguriert ist, die Istwerte der mehreren Schüsse, die vor und nach dem Austauschen der Formeinheit (10) durchgeführt werden und unter wenigstens einer von den gleichen Formungsbedingungen und den ähnlichen Formungsbedingungen durchgeführt werden, miteinander zu vergleichen.

4. Spritzgießinformationsverarbeitungsvorrichtung nach Anspruch 2 oder 3, ferner umfassend:
eine Spritzgießmaschinen-Abnormalität-Bestimmungseinheit (714), die konfiguriert ist, auf Grundlage eines Vergleichsergebnisses der Istwert-Vergleichseinheit (713) das Vorliegen oder Nichtvorliegen einer Abnormalität, die durch Verschlechterung der Spritzgießmaschine verursacht ist, zu bestimmen.

5. Spritzgießinformationsverarbeitungsvorrichtung nach einem der Ansprüche 2 bis 4, ferner umfassend:
eine Formeinheit-Abnormalität-Bestimmungseinheit (715), die konfiguriert ist, auf Grundlage des Vergleichsergebnisses der Istwert-Vergleichseinheit (713) das Vorliegen oder Nichtvorliegen einer Abnormalität, die durch Verschlechterung der Formeinheit (10) verursacht ist, zu bestimmen.

6. Spritzgießinformationsverarbeitungsvorrichtung nach einem der Ansprüche 2 bis 5, ferner umfassend:
eine Anzeigeverarbeitungseinheit (716), die konfiguriert ist, das Vergleichsergebnis der Istwert-Vergleichseinheit (713) anzuzeigen.

## Revendications

1. Un dispositif de traitement d'informations de moulage par injection (700) qui traite des informations relatives au moulage par injection, comprenant :
une unité de stockage de valeurs réelles (711) qui est configurée pour stocker, pour chacune d'une pluralité d'unités de moule par injection (10) qui peut être attaché à une machine de moulage par injection, des informations de moulage dans lesquelles une valeur définie d'une variable contrôlée qui correspond aux conditions de moulage et une valeur réelle d'une quantité physique relative à une variable manipulée pour un fonctionnement de telle sorte que la variable contrôlée est la valeur définie sont associées l'une à l'autre ; et
une unité d'extraction de valeurs réelles (712) qui est configurée pour extraire les valeurs réelles d'une pluralité d'injections effectuées dans au moins une des mêmes conditions de moulage et de conditions de moulage similaires, à partir des informations de moulage stockées dans l'unité de stockage de valeurs réelles (711).

2. Le dispositif de traitement d'informations de moulage par injection selon la revendication 1, comprenant en outre :
une unité de comparaison de valeurs réelles (713) qui est configurée pour comparer les valeurs réelles de la pluralité d'injections qui sont extraites par l'unité d'extraction de valeurs réelles (712) et sont effectuées dans au moins une des mêmes conditions de moulage et des conditions de moulage similaires, les unes aux autres.

3. Le dispositif de traitement d'informations de moulage par injection selon la revendication 2,
dans lequel l'unité de comparaison de valeurs réelles (713) est configurée pour comparer les valeurs réelles de la pluralité d'injections qui sont effectuées avant et après échange de l'unité de moule (10) et sont effectuées dans au moins une des mêmes conditions de moulage et des conditions de moulage similaires, les unes aux autres.

4. Le dispositif de traitement d'informations de moulage par injection selon la revendication 2 ou 3, comprenant en outre :
une unité de détermination d'anomalie de machine de moulage par injection (714) qui est configurée pour déterminer la présence ou l'absence d'anomalie causée par une détérioration de la machine de moulage par injection, sur la base d'un résultat de comparaison de l'unité de comparaison de valeurs réelles (713).

5. Le dispositif de traitement d'informations de moulage par injection selon l'une quelconque des revendications 2 à 4, comprenant en outre :
une unité de détermination d'anomalie d'unité de moule (715) qui est configurée pour déterminer la présence ou l'absence d'anomalie causée par une détérioration de l'unité de moule (10), sur la base du résultat de comparaison de l'unité de comparaison de valeurs réelles (713).

6. Le dispositif de traitement d'informations de moulage par injection selon l'une quelconque des revendications 2 à 5, comprenant en outre :
une unité de traitement d'affichage (716) qui est configurée pour afficher le résultat de comparaison de l'unité de comparaison de valeurs réelles (713).
